# EUROPEAN PATENT APPLICATION

(11) **EP 2 656 728 A1**
(43) Date of publication of application: **30.10.2013**
(21) Application number: 12165894.2
(22) Date of filing: 27.04.2012
(51) Int. Cl.: A01G 7/04, A01G 9/20

(54) **A tilting horticultural light and method of plant cultivation**

(71) Applicant: Valoya Oy, 00200 Helsinki (FI)
(72) Inventor: Ringbom, Rabbe, 02540 Kylmälä (FI); Kivimäki, Ilkka, 00150 Helsinki (FI)
(74) Representative: Väänänen, Mikko Kalervo

(57) **Abstract**

The invention is directed to providing artificial light optimally to plants during its growth cycle in a greenhouse (350) or growth chamber. This is achieved effectively by moving both the lighting device (2, 3 and 4) and its emission pattern to maximise incident light on the plants (5, 6 and 7) being cultivated.

A horticultural lighting device of the invention illuminates plants so that said lighting device (2, 3 and 4) is moved vertically and at least one light emitter (3 and 4) and/or reflector (2) is rotated to maximize light exposure from said lighting device on said plants (5, 6 and 7). In the best mode the movable and rotatable lighting device is used to grow very high plants. The lighting device (2, 3 and 4) is moved by a motor programmed to change the position of the lighting device and the orientation of the emission pattern in accordance with the growth cycle of the plants in the greenhouse (350) to maximise incident flux on said plants (5, 6 and 7).

## Description

### TECHNICAL FIELD OF INVENTION

The invention relates to a device and method for enhanced plant cultivation in greenhouse conditions using artificial lighting.

### BACKGROUND

Many plants used for a variety of purposes, such as food or decoration, are cultivated in greenhouses. Greenhouses typically employ various types of artificial lights to illuminate said plants. It is also known to grow plants in growth chambers, which may be fully or partially opaque or transparent and typically involve artificial lights.

US 4543744 exhibits a growth chamber which has a movable ceiling to which a horticultural light is attached. The horticultural light is designed to illuminate plants in said chamber. As the ceiling can be moved vertically, the attached horticultural light will also move vertically in accordance with the prior art. This document is cited here as reference.

EP0325003B1 describes a horticultural lighting system where a lamp can be moved longitudinally using hooks 6, hanging from a supporting rail 5. Light emitted by lamp 4 can be directed by reflector 3. This document is also cited here as reference.

The solutions of the prior art are suboptimal for illuminating plants whose size changes considerably as they grow. The prior art illumination solutions also have a high power consumption and small growth impact in plants.

### SUMMARY

The invention is directed to providing a device and method for distributing artificial light optimally to the plant during its growth cycle in the greenhouse or growth chamber.

The invention under study is directed towards a system and a method for effectively moving both the lighting device and its emission pattern to maximise incident light on the plants being cultivated.

One aspect of the invention involves a greenhouse lighting device that is attached to the roof of the greenhouse. When the plants are small seedlings the lighting device is lowered to a height where it radiates the seedlings effectively. Then, as time goes by the seedlings grow, and a large fraction of their surface area is exposed from the sides rather than the top. The lighting device is moved and the emission pattern of the lighting device is rotated so that it illuminates the maximum surface area of the plants being cultivated. The position of the lighting device and the orientation of its emission pattern are then simply altered as the plant grows to maximise incident flux from the lighting device on the plants.

A horticultural lighting device in accordance with the invention is arranged to illuminate plants and is **characterised in that**, said lighting device is arranged to be moved vertically and at least one light emitter and/or reflector is arranged to be rotated to maximize light exposure from said lighting device on said plants.

A method of illuminating plants in accordance with the invention comprises the following steps,
- a lighting device is arranged to be moved vertically, and
- at least one light emitter and/or reflector in said lighting device rotates to maximize light exposure from said lighting device on said plants.

The invention brings significant advantages. Firstly the artificial lights of the invention achieve the same growth impact in plants with considerably smaller power consumption in comparison to the prior art. Secondly more plants can be housed in the greenhouse, as the illumination solution that takes into account the growth cycle can be used to minimise shadowing factors due to various structures, and other plants. Thirdly, as the light position and outbound flux can be accurately controlled, growth impact can be maximised while taking care of keeping the light device sufficiently far away from the plants so that it does not burn them. Fourthly, the combination of using high efficiency LEDs and/or quantum dots that do not radiate much heat and the increased range of movement have an advantage in that the light emitters can be positioned closer to the plants, thereby minimising stray light that does not reach the plants. This is especially useful during the night or period of darkness. The fifth advantage is also considerable, as due to increased range of motion the lights can be manoeuvred to a position of minimum shadow during periods of very high levels of natural sunlight in the greenhouse, where they may be turned off for some periods of time.

A sixth crucial advantage is also the following: as the inventive lights are typically LEDs and/or quantum dots with the inventive increased range of motion features, these lights can be used to provide tender growth enhancing heat to several plants, such as cucumber, as the surface temperature of the lights is about 50-60 °C. This goal is similarly to some extent achieved also when said lights are arranged to have a surface temperature below 60, 70, 80, and/or 90 degrees Celsius (°C), or any temperature significantly lower than light bulb surface temperature.

In addition and with reference to the aforementioned advantage accruing embodiments, the best mode of the invention is considered to be application of the movable and rotatable lighting device to greenhouses that are used to grow very high plants. In the best mode, the lighting device is moved by a motor, which is programmed to change the position of the lighting device and the orientation of the emission pattern from said lighting device in accordance with the growth cycle of the plants in the greenhouse to maximise incident flux on said plants.

### BRIEF DESCRIPTION OF THE DRAWINGS

In the following the invention will be described in greater detail with reference to exemplary embodiments in accordance with the accompanying drawings, in which
Figure 1 demonstrates an embodiment 10 of the inventive lighting device used with growing plants in a series of figures 1A, 1B and 1C.
Figure 2 demonstrates an embodiment 20 of the plant illumination method in accordance with the invention as a flow diagram.
Figure 3 demonstrates an embodiment 30 of the inventive lighting device used with growing plants in a greenhouse.

Some of the embodiments are described in the dependent claims.

### DETAILED DESCRIPTION OF EMBODIMENTS

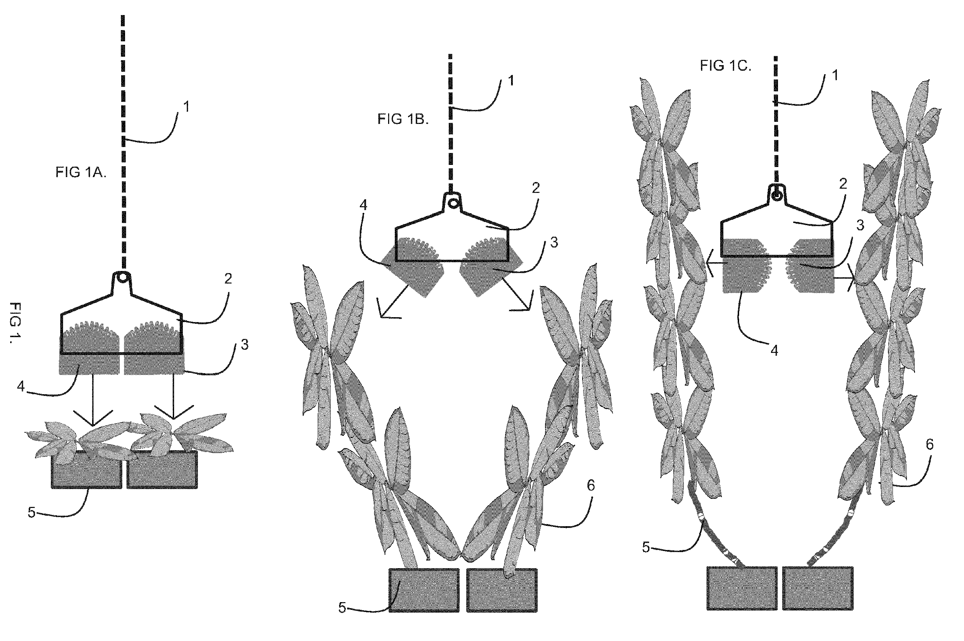

Figure 1 shows the device of the invention and its operation in a series of subfigures 1A 1B and 1C. The lighting device 2, 3, 4 is suspended from the roof of the greenhouse by a wire, rope and/or a chain 1. The lighting device has a frame 2 which may have reflectors installed in some embodiments. Attached to the frame 2 are two rotatable light emitters 3 and 4 in some embodiments of the invention. The plants 5 and 6 are located on the floor of the greenhouse underneath the light device 2, 3 and 4 in embodiment 10, but other geometrical configurations, such as placing the plants on tables, are also possible in other embodiments of the invention.

Let us observe the landscape figure 1 from top to bottom, the top figure being Figure 1A. In figure 1A the plants 5 and 6 are seedlings and are thus not very high. The frame 2 of the lighting device is lowered by making the wire, rope and/or a chain 1 long. The emission patterns of the light emitters 3, 4 are directed down. It is apparent from figure 1A that a large fraction of the emitted light falls on the seedlings 5 and 6.

The light emitters 3 and 4 are typically realised using LEDs (Light Emitting Diodes) and/or electrically powered emitting quantum dots, up-conversion materials such as phosphorus, quantum dots or the like with individual emitters, or in any kind of emitter and up-conversion material mix, or any permutation or combination. More traditional lights such as light bulbs and gas discharge tubes are also possible, but not preferable, in accordance with the invention. These lights have surface temperatures sufficiently high to burn the plants, and also workers of the green house, thereby decreasing productivity and work safety. The light emitters 3 and 4 could be of any power level in accordance with the invention, but the inventor has tested LED emitter arrays of 144 W and 192 W and found them to be of preferable magnitude. In some embodiments the lighting devices (2, 3 and 4) are arranged to have a surface temperature below 60, 70, 80, and/or 90 degrees Celsius (°C). This has the added advantage of providing light at high efficiency, but also providing heat at sufficiently tender level to enhance growth of a variety of plants such as cucumber. The aggregate growth enhancing energy consumption in this inventive solution is therefore superb in comparison to prior art, as these light can be brought very close to the plants to minimise radiation that does not fall on the plant being cultivated.

The seedlings 5 and 6 will quickly grow to become higher and bigger plants, which is shown in figure 1B. In order to illuminate these bigger and taller plants more effectively, the lighting device 2, 3, 4, is pulled to a higher location by shortening the wire, rope and/or a chain 1. In addition to the said vertical uplift, the light emitters 3 and 4 are rotated so that their emission patters illuminate the plants 5 and 6 as fully as possible. The direction of the emission pattern is shown by the arrows that start from the light emitters 3 and 4. As an alternative to rotation of the light emitters themselves, their emission pattern could also be directed with one or more reflectors in accordance with the invention in some embodiments. In some embodiments the length of wire, rope and/or a chain 1 is controlled by a motor. In some embodiments the direction of the emission pattern of light emitters 3 and 4 is controlled by a motor. In some embodiments both the said direction of the emission pattern and the length of wire, rope and/or a chain 1 are controlled by the motor. For example, in one embodiment the wire, rope and/or a chain 1 is attached to a beam at a high position inside the greenhouse, and a motor is arranged to turn the beam so that wire, rope and/or a chain 1 coils around the beam, thereby bringing the light emitters 3 and 4 and frame 2 higher. Clearly, when the motor rotates the beam to the other direction, the wire, rope and/or a chain 1 unwinds from the coil and the light emitters 3 and 4 and frame 2 are lowered in this embodiment. It should be noted that in addition to the roof or the mentioned beam the wire, rope and/or a chain 1 can be attached to any other structure in accordance with the invention.

In some embodiments there is a computer or some other logic circuit controlling the motor, the length of wire, rope and/or a chain 1 and/or the direction of the emission pattern of light emitters 3 and 4 so that the plants 5 and 6 receive the optimum amount of light at different stages of their growth cycle. In some embodiments the spectrum emitted by one or more light emitters is also arranged to be changed in accordance with the growth cycle of said plant. In one practical embodiment, these lights 3, 4 are used first for two weeks on cucumber seedlings in the configuration of Figure 1A, and then turned into interlights as shown in figure 1B and figure 1C.

In figure 1 C the plants 5 and 6 are already very high, and have a considerably higher sideways surface area than their top view surface area. At his stage of the growth cycle the light emitters 3 and 4 are turned horizontal, and they emit an emission pattern in the horizontal direction. This maximises the incident flux on plants 5 and 6 when they are at their highest in Figure 1C. This also increases the number of plants that can be hosted in a greenhouse of a certain area and/or volume, as plants can be more tightly spaced and still receive sufficient light for their growth objectives.

It should be noted that aspects of the embodiment 10 can be freely combined and permuted with embodiment 20 and/or 30 in accordance with the invention.

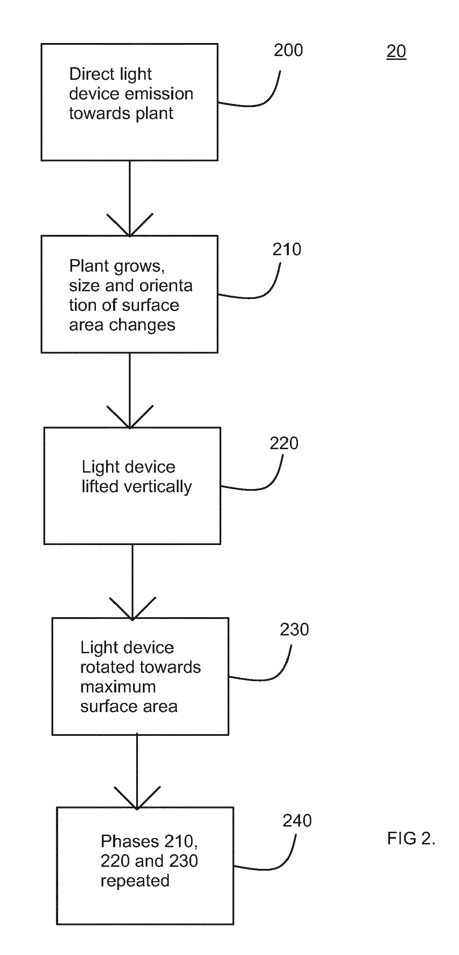

Figure 2 shows the operation of the system in Figure 1 as a flow diagram. In phase 200 light from artificial lights 3 and 4 is directed towards the plants. This can be achieved by turning the light emitters, moving the light emitters and/or by directing their emission pattern with one or more reflectors in accordance with the invention.

In phase 210 the plants 5, 6 grow, and as a result of this the size and orientation of the surface area of said plants changes. In response to phase 210 the light device is lifted higher in phase 220. Further, in response to phase 210 the light emission pattern of the light device is rotated in phase 230. This is achieved by rotating the emitters 3, 4 themselves and/or by directing the emission pattern from said emitters with one or more reflectors. In phase 240 the preceding phases are repeated in accordance with the invention. The aforementioned logic is what the computer in control of the motor controlling the height and the direction of the light emission patterns would follow in some embodiments of the invention.

It should be noted that aspects of the embodiment 20 can be freely combined and permuted with embodiment 10 and/or 30 in accordance with the invention.

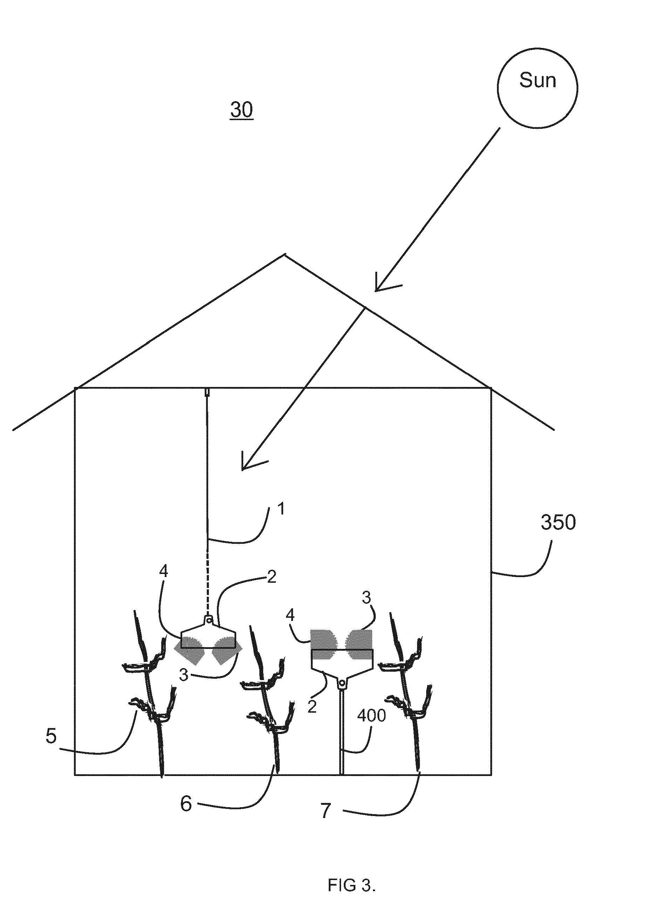

Figure 3 shows an embodiment 30 where inventive lighting devices are used in the greenhouse 350 to illuminate the plants 5, 6 and 7.

It should be noted that embodiments 10 and 20 described the inventive light device being suspended from a roof with a wire, rope and/or a chain 1. This is also shown here in Figure 3 on the left with wire, rope and/or a chain 1. However, the invention can be operated analogously also by suspending the lighting device on a pole 400, whose height is adjusted. The height of the pole 400 from the floor of the greenhouse 350 is then simply controlled in accordance with the invention. The light emitters 3, 4, are typically rotated by a motor around a mechanical joint or hinge that allows a full or partial rotation of the light emitter around an axis. Similarly the length of the pole 400 or the length of the wire, rope and/or a chain 1 can be controlled by a motor in some embodiments of the invention. In some embodiments the pole 400 is a hydraulic pole, which is lengthened and shortened hydraulically.

Typically the length of the pole 400 or the length of the wire, rope and/or a chain 1 are controlled to maximise incident light on plants 5, 6 and/or 7. Similarly, the direction of the emitted light from emitters 3, 4 is controlled to maximise incident light on plants 5, 6 and/or 7. The control can be effected by rotating the emitters themselves, or by using reflectors to control the direction of the emitted light.

In some embodiments of the invention it is also possible to implement a beam anchored to the wall of the greenhouse, and deliver light in between the plants by controlling the length of the beam and rotating the light emission pattern in accordance with the invention.

It should be noted that the inventive lighting system can be deployed with any number of plants of any species or different species or plants in any spatial configuration. The plants may be placed in even rows, or spaced out in a random configuration in the greenhouse or in any ordered configuration in between in accordance with the invention.

It should further be noted that even though the preceding embodiments have described the lights as interplant lights, the same lights can also be used as ceiling and/or floor lights in accordance with the invention.

The invention has been explained above with reference to the aforementioned embodiments and several commercial and industrial advantages have been demonstrated. The methods and arrangements of the invention allow the artificial lights of the invention to achieve the same growth impact in plants with considerably smaller power consumption in comparison to the prior art. Secondly more plants can be housed in the greenhouse, as the illumination solution that takes into account the growth cycle can be used to minimise shadowing factors due to various structures, and other plants. Thirdly, as the light position and outbound flux can be accurately controlled, growth impact can be maximised while taking care of keeping the light device sufficiently far away from the plants so that it does not burn them. Fourthly, the combination of using high efficiency LEDs and/or quantum dots that do not radiate much heat and the increased range of movement have an advantage in that the light emitters can be positioned closer to the plants, thereby minimising stray light that does not reach the plants. This is especially useful during the night or period of darkness. The fifth advantage is also considerable, as due to increased range of motion the lights can be manoeuvred to a position of minimum shadow during periods of very high levels of natural sunlight in the greenhouse, where they may be turned off for some periods of time.

A sixth crucial advantage is also the following: as the inventive lights are typically LEDs and/or quantum dots with the inventive increased range of motion features, these lights can be used to provide tender growth enhancing heat to several plants, such as cucumber, as the surface temperature of the lights is about 50-60 °C. This goal is similarly to some extent achieved by the invention also when said lights are arranged to have a surface temperature below 60, 70, 80, and/or 90 degrees Celsius (°C), or any temperature significantly lower than light bulb surface temperature.

The invention has been explained above with reference to the aforementioned embodiments. However, it is clear that the invention is not only restricted to these embodiments, but comprises all possible embodiments within the spirit and scope of the inventive thought and the following patent claims.

### REFERENCES

US 4543744, Royster J.L "Plant Growing Chamber"
EP0325003B1, Poot J. Jr, "Fitting for horticultural lighting"

## Claims

1. A horticultural lighting device (2, 3 and 4) arranged to illuminate plants (5, 6 and 7) **characterised in that**,
said lighting device is arranged to be moved vertically and at least one light emitter (3, 4) and/or reflector (2) is arranged to be rotated to maximize light exposure from said lighting device on said plants.

2. A lighting device as claimed in claim 1, **characterised in that**, said lighting device (2, 3 and 4) is arranged low when said plants (5, 6 and 7) are seedlings, and as said plants grow higher said lighting device is arranged to be lifted vertically higher.

3. A lighting device as claimed in claim 1 and/or 2, **characterised in that**, said lighting device (2, 3 and 4) is arranged to have a downward facing emission pattern when said plants (5, 6 and 7) are seedlings, and as said plants grow higher said emission pattern of said lighting device is arranged to be turned towards the horizontal plane.

4. A lighting device as claimed in claim 1, 2 and/or 3, **characterised in that**, said lighting device (2, 3 and 4) is arranged to be suspended above and in between plants (5, 6 and 7).

5. A lighting device as claimed in claim 1, 2, 3 and/or 4, **characterised in that**, the position and/or direction of emission pattern is controlled by a motor, which is arranged to move the lighting device (2, 3 and 4) and/or turn at least one light emitter (3, 4) and/or reflector (2) to turn the direction of the emission pattern of said lighting device.

6. A lighting device as claimed in claim 1, **characterised in that**, said lighting device (2, 3 and 4) is arranged to be suspended from a roof (1) and arranged to illuminate plants (5, 6, 7) underneath said roof.

7. A lighting device as claimed in claim 1, **characterised in that**, said lighting device (2, 3 and 4) is arranged to have a surface temperature below 60, 70, 80, and/or 90 degrees Celsius (°C) and/or is a LED and/or a quantum dot light emitter.

8. A method of illuminating plants (5, 6, 7), comprising the following steps,
- a lighting device (2, 3 and 4) is arranged to be moved vertically, and
- at least one light emitter (3, 4) and/or reflector (2) in said lighting device rotates to maximize light exposure from said lighting device on said plants.

9. A method as claimed in claim 8, **characterised in that**, said lighting device (2, 3 and 4) is at a low position when said plants (5, 6 and 7) are seedlings, and as said plants grow higher said lighting device moves vertically higher.

10. A method as claimed in claim 8 and/or 9, **characterised in that**, said lighting device (2, 3 and 4) has a downward facing light emission pattern when said plants (5, 6 and 7) are seedlings, and as said plants grow higher said emission pattern of said lighting device turns towards the horizontal plane.

11. A method as claimed in claim 8, 9 and/or 10, **characterised in that**, said lighting device (2, 3 and 4) is suspended above and in between plants (5, 6 and 7).

12. A method as claimed in claim 8, 9, 10 and/or 11, **characterised in that**, the position and/or direction of emission pattern is controlled by a motor, which moves the lighting device (2, 3 and 4) and/or turns at least one light emitter (3, 4) and/or reflector (2) to turn the direction of the emission pattern of said lighting device.

13. A method as claimed in claim 8, **characterised in that**, said lighting device (2, 3 and 4) is suspended (1) from a roof and illuminates plants (5, 6 and 7) underneath said roof.

14. A method as claimed in claim 8, **characterised in that**, said lighting device (2, 3 and 4) is arranged to have a surface temperature below 60, 70, 80, and/or 90 degrees Celsius (°C) and/or is a LED and/or a quantum dot light emitter.
